# EUROPEAN PATENT SPECIFICATION

(11) **EP 1 845 285 B1**
(45) Date of publication and mention of the grant of the patent: **05.08.2015**
(21) Application number: 06711536.0
(22) Date of filing: 11.01.2006
(51) Int. Cl.: F16G 1/08, F16G 5/06, F16G 5/20

(54) **FRICTION TRANSMISSION BELT**
REIBGETRIEBERIEMEN
COURROIE DE TRANSMISSION PAR FRICTION

(30) Priority: 13.01.2005 JP 2005006753
(43) Date of publication of application: 17.10.2007
(73) Proprietor: Bando Chemical Industries Ltd., Kobe-shi, Hyogo 652-0882 (JP)
(72) Inventor: SHIRIIKE, Hiroyuki, Hyogo-ku, Kobe-shi, Hyogo, 6520882 (JP); YOSHIDA, Yasuhiko, Hyogo-ku, Kobe-shi, Hyogo, 6520882 (JP); TACHIBANA, Hiroyuki, Hyogo-ku, Kobe-shi, Hyogo, 6520882 (JP)
(74) Representative: Weickmann & Weickmann
(86) International application number: PCT/JP2006/300187
(87) International publication number: WO 2006/075600

(56) References cited:
- JP-A- 2004 324 796
- JP-A- 2004 507 679
- US-A1- 2002 042 317
- US-A1- 2003 032 514
- US-A1- 2004 214 674

## Description

### TECHNICAL FIELD

The present invention relates to a friction transmission belt.

### BACKGROUND ART

In the friction transmission belt for motive power transmission to be used for auxiliary driving of automobiles, or the like, the slip sound generated conventionally at the time of belt driving is regarded as noise and thus it has been a problem to be improved for making automobile calm. There is one kind noise generated from the belt is slip noise caused at the time when water penetrates an engine room and the belt is immersed in water. As a technique to be employed conventionally for improving the slip sound at the time of immersion in water, there have been adding short fibers in the belt rib part or applying a water-repelling agent to the surface of the belt rib part.

However, in the case of the transmission belt containing short fibers in the belt rib part, although the slip sound at the time of immersion in water can be improved by using short fibers, because the modulus of elasticity is quite different between the short fibers and rubber, the stress is converged upon the interface of the short fibers and rubber when bending fatigue affects the transmission belt and the interface becomes a cracking starting point and a crack is quickly grown to shorten the product life. Particularly, in the tip end of the rib mountain where surfaces of the short fibers aligned in the belt width direction are exposed, the adhesion interface of the rubber and short fibers is exposed largely and the rib mountain tends to be broken due to cracking.

On the other hand, with respect to the method for applying a water-repelling agent to the belt rib part, the working steps for applying the water-repelling agent after the rib shape is formed are increased to cause a problem that the production cost of the belt is increased.

Further, as another method besides the above-mentioned methods, it has been tried for suppressing slip sound at the time of immersion in water by adding silica to the rubber which is to be brought into contact with a pulley.

For example, Patent Document 1 discloses a V-ribbed belt with improved noise occurrence because of slip caused at the time of water pouring by composing at least a portion of the rib part side surface using a rubber mixture containing an ethylene-α-olefin elastomer, silica, and short fibers. However, herein, the rib comprises a rubber layer containing silica and a rubber layer containing no silica. Therefore, in the case where the rubber layer containing silica is formed in a portion of the belt rib part, rubbers with different blending have to be used and it results in a problem that the working steps becomes complicated. Further, since short fibers are added, there occurs a problem that the product life is shortened due to the bending fatigue as described above.

Patent Document 2 discloses a transmission belt with suppressed pressure sensitive adhesion wear without losing the reinforcing effect and decreased noise at the time of driving by using a chloroprene rubber composition containing prescribed amounts of surface treated silica, carbon black, a vulcanization promoting agent, a vulcanization agent, and short fibers for the compressed rubber layer and having specified physical properties. However, due to addition of the short fibers, there occurs a problem that the product life is

shortened due to the bending fatigue.

Patent Document 3 discloses a transmission belt made of rubber obtained by adding silica and co-crosslinking agent to hydrogenated nitrile rubber containing an unsaturated carboxylic acid metal salt and causing crosslinking by adding an organic peroxide. However, suppression of slip noise has not necessarily been discussed in detail in the case of using an ethylene-α-olefin elastomer for the compressed rubber layer.

Patent Document 4 discloses a frictional forced power transmission belt, a part of which is formed of a rubber composition which contains ethylene-α-olefin elastomer as a rubber component but contains substantially no short fibers and which has a rubber hardness of not less than 80 but less than 95 when measured with a type A durometer in conformity with JIS K6253. The transmission belt may further comprise carbon black.

Patent Document 5 discloses a multi-ribbed belt having a modified coefficient of friction at a belt side/pulley interface. The modified coefficient of friction causes the belt to operate more quietly. The modified coefficient of friction is the result of graphite and carbon black added to the elastomer. Graphite is added in the amount of approximately 40 to 100 parts by weight of graphite for each 100 parts by weight of polymer. Carbon black is added in the amount of approximately 20 to 100 parts for each 100 parts elastomer.

Accordingly, with respect to a friction transmission belt for motive power transmission, it has been desired to develop a friction transmission belt whose production working steps are easy and which can suppress the slip noise generated at the time of immersion of the belt drive part in water and is excellent in the bending fatigue strength at the time of belt running.

Patent Document 1: Japanese Kokai Publication 2003-247604
Patent Document 2: Japanese Kokai Publication 2002-69240
Patent Document 3: Japanese Kokai Publication 2003-221470
Patent Document 4: US 2004/214674 A1
Patent Document 5: US 2003/032514 A1

### DISCLOSURE OF THE INVENTION PROBLEMS FOR SOLVING THE INVENTION

In view of the above state of the art, the present invention aims to provide a friction transmission belt in which slip noise caused at the time when a belt drive portion is immersed in water is suppressed and which has excellent bending fatigue strength.

The present invention provides a friction transmission belt
which contains a compressed rubber layer having a hardness after vulcanization measured by a type A durometer according to JIS K 6253 in a range of from 80 or higher to less than 95 and containing ethylene-α-olefin elastomer and silica and practically no short fiber, wherein the content of the above-mentioned silica is 40 to 100 parts by weight to 100 parts by weight of the above-mentioned ethylene-α-olefin elastomer.

The ethylene content in the above-mentioned ethylene-α-olefin elastomer is preferably 60% by weight or higher and less than 80% by weight.

The above-mentioned friction transmission belt is preferably a V-ribbed belt or a flat belt.

Hereinafter, the present invention will be described more in detail.

The friction transmission belt of the present invention contains a compressed rubber layer having hardness after vulcanization measured by a type A durometer according to JIS K 6253 in a range from 80 or higher to less than 95 and containing ethylene-α-olefin elastomer and silica and practically no short fiber. Therefore, the slip noise caused at the time when the belt drive portion is immersed in water can be suppressed and the bending fatigue strength is excellent at the time of belt running.

Generally, with respect to the friction transmission belt, although the slip sound at the time of immersion in water can be improved by adding short fibers in the belt rib part, cracking tends to occur when the bending fatigue affects the belt. In the present invention, addition of silica to the compressed rubber layer provides proper roughness to the belt surface and can thus suppress generation of slip sound. Further, since the compressed rubber layer contains silica and the ethylene-α-olefin elastomer and has hardness after vulcanization in a range from 80 or higher to less than 95 (measured by a type A durometer according to JIS K 6253), the layer supplements the mechanical strength for the rubber and gives hardness proper to maintain sufficient belt strength even if the belt does not practically contain short fibers.

With respect to the friction transmission belt of the present invention, the above-mentioned compressed rubber layer has hardness after vulcanization measured by a type A durometer according to JIS K 6253 in a range from 80 or higher to less than 95. Therefore, the friction transmission belt has a proper belt strength. Further, in general, to keep proper belt strength, short fibers are conventionally added, however even though practically containing no short fiber, the above-mentioned compressed rubber layer has the above-mentioned specified hardness, as described later. Accordingly, since the above-mentioned compressed rubber layer contains practically no short fiber, portions where the stress convergence unevenly occurs when the belt receives bending power practically disappear, which results in difficulty of occurrence of cracking. As a result, the belt bending life can be improved.

If the above-mentioned hardness is lower than 80, the strength of the friction transmission belt is low and therefore the rib part may be possibly broken. If it is 95 or higher, the bending fatigue strength may be possibly lowered. The above-mentioned hardness is preferably 83 to 91.

In the friction transmission belt, the above-mentioned compressed rubber layer contains the ethylene-α-olefin elastomer and silica. Use of the ethylene-α-olefin elastomer and silica makes it possible to obtain the compressed rubber layer having hardness after vulcanization measured by a type A durometer according to JIS K 6253 in a range from 80 or higher and lower than 95.

The water pouring slip sound generated in the case where the friction transmission belt is immersed in water is generated due to occurrence of stick slip because of existence of water in the interface of the compressed rubber layer surface and the pulley, and addition of the silica in the present invention coarsens the surface roughness of the compressed rubber surface, so that the water film at the time of such water pouring is scarcely formed and as a result, the slip at the time of water pouring is suppressed and generation of the water pouring slip sound can be suppressed. Further, in the present invention, since the ethylene-α-olefin elastomer and silica are used, it is made possible to obtain the belt having hardness after vulcanization as described above and accordingly having high belt strength. Therefore, even if the compressed rubber layer in the present invention practically contains no short fiber, which is conventionally used, sufficiently high belt strength is provided and also excellent bending fatigue strength can be provided.

The above-mentioned ethylene-α-olefin elastomer to be used may be rubbers made of copolymers of α-olefin excluding ethylene with ethylene and diene (non-conjugated diene), their partially halogen-substituted compounds; or mixtures of two or more kinds of these compounds. The α-olefin excluding ethylene to be used may be preferably at least one kind compound selected from propylene, butene, hexene, and octene. Among them, ethylene-propylene-diene type rubber (hereinafter, abbreviated as EPDM) is preferable in terms of capability of suppression of the slip sound and excellent bending fatigue strength. Further, their halogen substituted compounds and blends with other rubbers may be also usable. The diene type is preferably ethylidene norbornene (ENB) in terms of the effect of the present invention. Further, ethylene-propylene type rubber (EPR) containing no diene component may be also selected.

The ethylene content in the above-mentioned ethylene-α-olefin elastomer (the content of structural unit derived from ethylene in the ethylene-α-olefin elastomer) is preferably 60% by weight or higher and lower than 80% by weight in 100% by weight of the total of ethylene, α-olefin and diene composing the above-mentioned ethylene-α-olefin-diene rubber. In the case of using the ethylene-α-olefin elastomer having the ethylene content in a range from 60% by weight or higher to lower than 80% by weight in combination with silica, even in the case where the compressed rubber layer practically contains no short fiber, it is made possible to obtain high rubber hardness and sufficiently high belt hardness and at the same time water pouring slip sound can be sufficiently suppressed. Therefore, in the case of using the above specified ethylene-α-olefin elastomer, the water pouring slip sound can be more preferably suppressed and at the same time, the friction transmission belt is provided with more excellent bending fatigue strength.

If the above-mentioned ethylene content is lower than 60% by weight, the rubber may possibly become soft. If it is 80% by weight or higher, the rubber may become too hard to be used for the belt. The above-mentioned ethylene content is preferably 60 to 70% by weight.

Examples of commercialized products of the above-mentioned ethylene-α-olefin elastomer are Nordel IP 3670 (trade name: EPDM, ethylene content 58% by weight, manufactured by DuPont Dow Elastomer) and Nordel IP 3745P (trade name: EPDM, ethylene content 70% by weight, manufactured by DuPont Dow Elastomer). Since the hardness of the above-mentioned compressed rubber layer after vulcanization measured by a type A durometer according to JIS K 6253 needs to be in a range from 80 or higher and lower than 95, they may be used alone or two or more kinds thereof may be used in combination so as to control the ethylene content in a range from 60% by weight or higher to lower than 80% by weight.

Besides the above-mentioned ethylene-α-olefin elastomer, the above-mentioned compressed rubber layer may contain other polymers such as hydrogenated nitrile rubber, chloroprene rubber, natural rubber, CSM, ACSM, and SBR to an extent that the effect of the present invention is not inhibited.

The above-mentioned silica is not particularly limited and conventionally known ones can be used and examples thereof are dry silica, wet silica, and surface treated silica. The above-mentioned wet silica (hydrous silicic acid) can be generally obtained by a method of causing reaction of sodium silicate with a mineral acid and salts in an aqueous solution and as compared with dry silica, the wet silica has a large number of silanol groups in the front face and therefore has high polarity. Further, the wet silica has advantageous points that the cost is low as compared with that of the dry silica and the processability is good. The above-mentioned surface treated silica is provided with improved dispensability by surface treatment of dry silica or wet silica with a silane coupling agent.

The content of the above-mentioned silica is 40 to 100 parts by weight to 100 parts by weight (on the basis of solid matter) of the ethylene-α-olefin elastomer. Addition of silica in the above specified content makes it possible to satisfy both excellent suppression of water pouring slip sound generation and bending fatigue strength. If it is lower than 40 parts by weight, the rubber surface roughness becomes so low as to form a water film and may cause stick slip easily. If it exceeds 100 parts by weight, the rubber becomes so hard as to cause cracks easily due to the bending fatigue during the driving and the belt life may be possibly shortened. The above-mentioned content is preferably 60 to 80 parts by weight.

In the present invention, the above-mentioned compressed rubber layer practically contains no short fiber. If practically no short fiber is added, generally the slip sound at the time of water pouring tends to be caused or the mechanical strength of the rubber is lowered, however since, in the friction transmission belt of the present invention, the compressed rubber layer contains the above-mentioned silica and the above-mentioned ethylene-α-olefin elastomer, the slip sound can be suppressed and the rubber hardness is high. Further, since practically no short fiber is contained, there is no possibility of occurrence of a problem that due to the difference of modulus of elasticity between the short fibers and the rubber, the stress is converged upon the interface of the short fibers and rubber when bending fatigue affects the compressed rubber layer and the interface becomes a cracking starting point and a crack is quickly grown to shorten the product life.

The fact that the above-mentioned compressed rubber layer practically contains no short fiber means that the layer does not contain the short fibers in an amount so much as to cause effect of the addition of the short fibers; that is, the layer does not contain the short fibers in an amount so much as to suppress slip noise generation or improve the mechanical strength of the rubber. Herein, the content of short fibers practically containing no short fiber is, for example, D to 5 parts by weight to 100 parts by weight of the ethylene-α-olefin elastomer. If it exceeds 5 parts by weight, the material cost may possibly become high. It is preferably 0 parts by weight. Examples of the above-mentioned short fibers may be nylon 6, nylon 66, polyesters, cotton, and aramides.

The above-mentioned compressed rubber layer is preferable to contain a silane coupling agent. If silica is added, the rigidity is increased and cracking tends to occur, however addition of the silane coupling agent can suppress occurrence of cracking.

Examples of the above-mentioned silane coupling agent may be 3-aminopropyltriethoxysilane, 3-aminopropyltrimethoxysilane, N-β-(aminoethyl)γ-aminopropyltrimethoxysilane, 3-mercaptopropyltrimethoxysilane, γ-ureidopropyltriethoxysilane, 3-cyanopropyldimethylchlorosilane, 3-[N-allyl-N-(2-aminoethyl)]aminopropyltrimethoxysilane, P-[N-(2-aminoethyl)aminomethyl]phenetyltrimethoxysilane, N-(2-aminomethyl)-3-aminopropylmethyldimethoxysilane, 1-(3-aminopropyl)-1,1,3,3,3-pentamethyldisiloxane, 3-aminopropyltris(trimethylsiloxane)silane, α, ω-bis(3-aminopropyl)polydimethylsiloxane, α, ω-bis(3-aminopropyl)polydimethylsiloxane, 1,3-bis(3-aminopropyl)-1,1,3,3-tetramethyldisiloxane, α, ω-bis(mercaptomethyl)polydimethylsiloxane, α, ω-bis(mercaptomethyl)polydimethylsiloxane, 1,3-bis(mercaptomethyl)-1,1,3,3-tetramethyldisiloxane, α, ω-bis(3-mercaptopropyl)polydimethylsiloxane, α, ω-bis(3-mercaptopropyl)polydimethylsiloxane, 1,3-bis(3-mercaptomethyl)-1,1,3,3-tetramethyldisiloxane, N,N-bis[(methyldimethoxysilyl)propyl]amine, N,N-bis[3-(methyldimethoxysilyl)propyl]ethylenediamine, N,N-bis[3-(trimethoxysilyl)propyl]amine, N,N-bis[3-(trimethoxysilyl)propyl]ethylenediamine, 3-mercaptopropyltris(trimethylsiloxy)silane, 1-trimethoxysil-4,7,10-triazadecane, N-[(3-trimethoxysilyl)propyl]triethylenetetramine, and N-3-trimethoxysilylpropyl-m-phenylenediamine.

The content of the above-mentioned silane coupling agent is preferably 1 to 20 parts by weight and more preferably 2 to 12 parts by weight to 100 parts by weight of the above-mentioned ethylene-α-olefin elastomer (on the basis of solid matter). If it is out of the above-mentioned range, the effect to suppress occurrence of cracking may not be caused sufficiently.

The rubber mixture for forming the above-mentioned compressed rubber layer can be crosslinked by sulfur or a peroxide.

The above-mentioned peroxide for crosslinking is not particularly limited and common organic peroxides may be used and examples thereof are dicumyl peroxide, di-tert-butyl peroxide, tert-butylcumyl peroxide, benzoyl peroxide, 1,3-bis(tert-butylperoxyisopropyl)benzene, 2,5-dimethyl-2,5-di(tert-butylperoxy)hexine-3,2,5-dimethyl-2,5-(benzoylperoxy)hexane, and 2,5-dimethyl-2,5-mono(tert-butylperoxy)hexane.

The addition amount of the above-mentioned organic peroxide may be set properly in accordance with the functional group amount and the molecular weight of the organic peroxide, or diene amount of EPDM, however, in general, they may be generally added alone or in form of a mixture in an amount of 0.5 to 5 g to 100 g of the ethylene-α-olefin elastomer.

In the case of crosslinking by the peroxide, a crosslinking aid may also be added. Addition of the crosslinking aid is effective to increase the crosslinking density and thereby stabilize the adhesive power and prevent a problem such as pressure sensitive adhesion wear or the like. The above-mentioned crosslinking aid may be those which are used commonly for peroxide crosslinking and examples thereof may include triallyl isocyanurate (TAIC), triallyl cyanurate (TAC), 1,2-polybutadiene, metal salts of unsaturated carboxylic acids, oximes, guanidine, trimethylolpropane trimethacrylate, ethylene glycol dimethacrylate, N,N'-m-phenylenebismaleimide, and sulfur.

In the case of the sulfur vulcanization, the addition amount of sulfur is preferably 1 to 3 parts by weight to 100 parts by weight of the ethylene-α-olefin elastomer.

In the case of sulfur vulcanization, a vulcanization promoting agent may also be added. Addition of the vulcanization promoting agent can prevent the problem of pressure sensitive adhesion wear by increasing the crosslinking density. The above-mentioned vulcanization promoting agent may be those which are used commonly as a vulcanization promoting agent and examples thereof may be N-oxydiethylenebenzothiazole-2-sulfenamide (OBS), tetramethylthiuram disulfide (TMTD), tetraethylthiuram disulfide (TETD), zinc dimethyldithiocarbamate (ZnMDC), zinc diethyldithiocarbamate (ZnEDC), N-cyclohexylbenzothiazole-2-sulfenamide, and 2-mercaptobenzothiazole, and dibenzothiazolyldisulfide.

The mixture containing ethylene-α-olefin elastomer and silica for forming the above-mentioned compressed rubber layer in the present invention may contain, if necessary, various kinds of chemical agents to be used commonly in rubber industries, e.g. fillers such as carbon black, calcium carbonate, and talc; plasticizers, stabilizers, processing aids, aging prevention agents, and coloring agents, in combination with these components.

The mixture for forming the compressed rubber layer can be obtained by evenly mixing the indispensable components such as the ethylene-α-olefin elastomer with the above-mentioned chemical agents by common mixing means such as rolls and a Bumbury's mixer, if necessary.

Examples of the friction transmission belt of the present invention may include those each of which comprises the above-mentioned compressed rubber layer, an adhesive rubber layer being in contact with the compressed rubber layer and containing core wires embedded along the longitudinal direction of the belt, and a top canvas layer being in contact with the adhesive rubber layer.

The friction transmission belt of the present invention may include those which do not have the above-mentioned adhesive rubber layer.

The rubber components to be used for forming the adhesive rubber layer may be those same as exemplified for the compressed rubber layer.

The mixture for forming the adhesive rubber layer may further contain the above-mentioned other components similarly to the case of the above-mentioned compressed rubber layer. The mixture for forming the adhesive rubber layer can be obtained in the same manner as the method for the above-mentioned compressed rubber layer.

Examples of the top canvas layer to be used may be cloths fabricated in plain weave fabrics, twill fabrics, satin fabrics using yarns of cotton, polyamides, polyethylene phthalate, aramide short fibers.

The above-mentioned core wires to be used may be preferably polyester core wires, nylon core wires, vinylon core wires, aramide core wires and the like, and among them, examples of the polyester core wires are preferably polyethylene terephthalate and polyethylene naphthalate and examples of the nylon core wires are preferably 6,6-nylon (polyhexamethylene adipamide) and 6 nylon. Examples of the aramide core wires to be used are preferably copoly(p-phenylene)-3,4'-oxydiphenylene-terephthalamide, poly(p-phenylene terephthalamide), and poly(m-phenylene isophthalamide). These core wires are generally adhesion treated with a resorcin-formalin-latex adhesive composition (RFL adhesive) etc. and embedded in the above-mentioned core body layer.

The friction transmission belt of the present invention is preferably a V-ribbed belt or a flat belt.

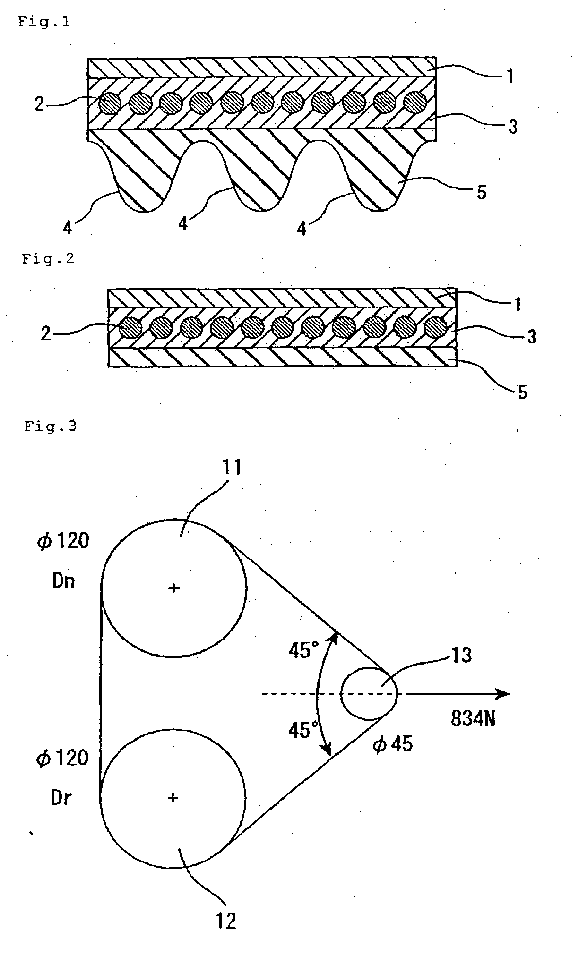

Examples of the V-ribbed belt or flat belt may be described with reference to Figs 1 and 2.

Figure 1 is a transverse cross-sectional view (sectional plane perpendicular to the longitudinal direction of a belt) of an example of a V-ribbed belt of the present invention, and on the top face of the belt, a top canvas layer-1 of a single layer or multilayer is formed, and the adhesive rubber layer 3 is laminated adjacent to the inside the canvas layer. In this adhesive rubber layer 3, a plurality of core wires 2 of low elongation consisting of fiber code are embedded at some spaces along the longitudinal direction of the belt. Further, the compressed rubber layer 5 is laminated adjacent to the inside this adhesive rubber layer. This compressed rubber layer is formed on ribs 4 that are spaced to each other along the longitudinal direction of the belt.

Figure 2 is a transverse cross-sectional view of an example of a flat belt of the present invention, and the top canvas layer 1, the adhesive rubber layer 3 and the compressed rubber layer 5 are laminated as with the above case.

The friction transmission belt in accordance with the present invention can be manufactured by ordinary methods hitherto known. For example, taking a V-ribbed belt for an example, after a sheet of or a plurality of top canvases and unvulcanized sheets of a rubber compound for a adhesive rubber layer are wound around the side of a cylindrical forming drum with a smooth surface, a core wire such as a polyester core wire is spun in a spiral manner around these sheets, and an unvulcanized sheet of a rubber compound for a adhesive rubber layer is wound thereon and then an unvulcanized sheet of a rubber compound for a compressed rubber layer is further wound to form a laminate. This laminate is heated and pressurized in a vulcanizer to be vulcanized to obtain an annular substance. Next, this annular substance is looped between a drive pulley and a driven pulley and a plurality of ribs are formed on the surface with a grinding wheel while running the belt under a prescribed tension. Thereafter, this annular substance is further looped between other drive pulley and other driven pulley and cut to the prescribed width while running the belt to obtain a V-ribbed belt as a product.

The friction transmission belt of the present invention contains a compressed rubber layer having hardness after vulcanization measured by a type A durometer according to JIS K 6253 in a range from 80 or higher to less than 95 and containing ethylene-α-olefin elastomer and silica and practically no short fiber. Therefore, practically no short fiber is contained and the slip sound caused at the time when the belt is immersed in water can be suppressed and the bending fatigue strength is excellent.

### EFFECT OF THE INVENTION

Since the friction transmission belt of the present invention has the above-mentioned configuration, the belt can suppress the slip sound generated at the time of immersion in water and is excellent in the bending fatigue strength. Accordingly, the friction transmission belt of the present invention is preferably usable as a belt for motive power transmission such as a belt for driving of automobile's auxiliaries (dynamo, air conditioner, power steering and the like).

### BEST MODE FOR CARRYING OUT THE INVENTION

Hereinafter, the present invention will be described in more detail with reference to Examples, however it is not intended that the present invention be limited to the illustrated Examples. In descriptions of Examples, "part" and "%" respectively means "part by weight" and "% by weight" unless otherwise specified.

### (Examples 1 to 4 and Comparative Examples 1 to 4) Production of adhesive rubber layer and compressed rubber layer

A compressed rubber layer was produced from the rubber mixture shown in Table 1 and after the mixture was mixed and kneaded by a Bumbury's mixer and rolled by calendar rolls to form an unvulcanized sheet of a rubber compound for a compressed rubber layer. The rubber component was adjusted to contain a desired ethylene content by mixing a commercialized product as shown in Table 2. Commercialized products employed were as follows.
ethylene-propylene-diene rubber (EPDM):
Nordel IP 3670 (ethylene content 58%, diene type ENB, manufactured by DuPont Dow Elastomer)
Nordel IP 3745P (ethylene content 70%, diene type ENB, manufactured by DuPont Dow Elastomer)
Chloroprene rubber (CR): Neoprene GRT (sulfur-modified type chloroprene rubber, manufactured by DuPont Dow Elastomer)
Carbon black: HAF Carbon (manufactured by Mitsubishi Chemical Corporation)
Paraffin oil: Sunflex 2280 (manufactured by Japan Sun Kagaku K.K.
Silica: Tokusil GU (manufactured by Tokuyama Corporation)
Silane coupling agent: Si-69 (manufactured by Degussa)
Vulcanization aid: stearic acid (manufactured by Kao Corporation), zinc oxide (manufactured by Sakai Chemical Industry Co., Ltd.)
Aging prevention agent: 224, MB (all manufactured by Ouchi Shinko Chemical Industrial Co., Ltd.)
Organic peroxide: dicumyl peroxide (manufactured by NOF Corporation)
Short fiber: 66 nylon fibers, 6 de x 1 mm

With respect to the adhesive rubber layer, the components of the adhesive rubber layer were adjusted to be all same for Examples and Comparative Examples to produce an unvulcanized sheet of a rubber compound for an adhesive rubber layer.

### Production of transmission belt

After a canvas and the above-mentioned unvulcanized sheet of a rubber compound for an adhesive rubber layer were wound around the side of a cylindrical forming drum with a smooth surface, polyester core wires (polyester cord, 1000 denier/2 x 3, upper twist 9.5T/10 cm (Z) was spun in a spiral manner around these sheets. Further, the above-mentioned unvulcanized sheet of a rubber compound for an adhesive rubber layer were wound thereon, and then the unvulcanized sheet of a rubber compound for a compressed rubber layer was wound around this to obtain a laminate. This laminate was heated and pressurized at an internal pressure of 6 kgf/cm² and an external pressure of 9 kgf/cm² at a temperature of 165°C for 35 minutes in a vulcanizer and vulcanized it by steam to obtain an annular substance. Next, this annular substance was mounted on a first drive system comprising a drive roll and a driven roll and a plurality of ribs are formed on the surface with a grinding wheel while running the belt under a prescribed tension. Thereafter, this annular substance was further mounted on a second drive system comprising other drive roll and driven roll and cut to the prescribed width while running the belt to obtain a V-ribbed belt having three ribs and a peripheral length of 1000 mm as a product.

The hardness of the unvulcanized sheet of a rubber compound for a compressed rubber layer obtained in the above-mentioned manner was measured by the following method after vulcanization was carried out. Further, each V-ribbed belt obtained in the above-mentioned manner was subjected to the evaluations of belt bending life and slip sound by the following methods. The respective results are shown in Table 1.

### <Hardness of compressed rubber layer after vulcanization>

The hardness of the unvulcanized sheet of a rubber compound for a compressed rubber layer obtained in the above-mentioned manner was measured by type A durometer according to JIS K 6253 after vulcanization.

### <Belt bending life>

Fig. 3 shows a layout of a belt running tester for durability evaluation of each V-ribbed belt. The belt running tester comprises large diameter rib pulleys (a coupled pulley 11 in the upper side and a driving pulley 12 in the lower side) arranged up and down and having a pulley diameter of 120 mm and a small diameter rib pulley 13 arranged in rightward in the middle of the up and down direction and having a diameter of 45 mm. The small diameter rib pulley 13 was positioned in a manner that the belt rolling angle was to be 90°.

Each V-ribbed belt obtained in the above-mentioned manner was rolled around those three rib pulleys 11 to 13 and the small diameter rib pulley 13 was pulled sideward so as to apply 834N set weight and the belt running test was carried out by rotating the rib pulley 12 in the lower side, which was a drive pulley, at 4900 rpm rotation speed under atmospheric temperature of 23°C. Successively, the duration until cracks were formed in the rib part of the belt was measured and the duration was defined as the belt bending life.

### <Slip sound>

In Fig. 3, during the running of the belt, when water was poured to the drive pulley 12 (2000 cc/minute), generation of slip sound was evaluated.

**[Table 1]**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| EPDM (ethylene content 70%) | - | - | 100 | 100 | - | - | - | - |
| EPDM (ethylene content 58%) | - | - | - | - | 100 | 100 | 100 | - |
| EPDM (ethylene content 60%) | 100 | 100 | - | - | - | - | - | - |
| CR | - | - | - | - | - | - | - | 100 |
| Carbon black (HAF) | 30 | 30 | 30 | 30 | 65 | 30 | 30 | 30 |
| Silica | 60 | 100 | 40 | 60 | - | 35 | 110 | 60 |
| Silane coupling agent | 6 | 10 | 4 | 6 | - | 3.5 | 11 | 6 |
| Paraffin oil | 14 | 14 | 14 | 14 | 14 | 14 | 14 | - |
| Plasticizer | - | - | - | - | - | - | - | 5 |
| Vulcanization aid (zinc oxide) | 5 | 5 | 5 | 5 | 5 | 5 | 5 | 5 |
| Vulcanization aid (stearic acid) | 1 | 1 | 1 | 1 | 1 | 1 | 1 | 1 |
| Aging prevention agent | 2.5 | 2.5 | 2.5 | 2.5 | 2.5 | 2.5 | 2.5 | 2.5 |
| Organic peroxide | 2.5 | 2.5 | 2.5 | 2.5 | 2.5 | 2.5 | 2.5 | - |
| MgO | - | - | - | - | - | | - | 4 |
| Short fiber | - | - | - | - | 25 | - | - | - |
| Slip sound | low | none | low | none | none | high | none | high |
| Belt bending life (hours) | 1000 | 960 | 1000 | 1000 | 624 | 1000 | 552 | 600 |
| Rubber hardness | 83 | 91 | 81 | 87 | 88 | 78 | 95 | 85 |

**[Table 2]**

| Total ethylene content | Diene type | Trade name | Ethylene content | Blending ratio (%) |
|---|---|---|---|---|
| 58% | ENB | Nordel IP 3670 | 58% | 100 |
| 60% | ENB | Nordel IP 3670 | 58% | 83 |
| | | Nordel IP 3745P | 70% | 17 |
| 70% | ENB | Nordel IP 3745P | 70% | 100 |

As apparent from Table 1, the belts of Examples were found generating no slip sound or low slip sound and having a long belt bending life and sufficient hardness. On the other hand, the belt of Comparative Example 1 containing short fibers and no silica was found having a belt bending life of 624 hours. The belt of Comparative Example 2 having hardness of 78 generated high slip sound: the belt of Comparative Example 3 having hardness of 95 was found having a belt bending life of 552 hours. The belt of Comparative Example 4 using chloroprene generated high slip sound. Further it had an environmental problem.

### INDUSTRIAL APPLICABILITY

The friction transmission belt of the present invention is preferably usable as a belt for motive power transmission such as a belt for driving of automobile's auxiliaries (dynamo, air conditioner, power steering and the like).

### BRIEF DESCRIPTION OF THE DRAWINGS

Fig. 1 shows a transverse cross-sectional view of one example of a V-ribbed belt.
Fig. 2 shows a transverse cross-sectional view of one example of a low edge belt.
Fig. 3 shows a transverse cross-sectional view of one example of a flat belt.
Fig. 4 shows a layout of a belt running test apparatus.

### DESCRIPTION OF SYMBOLS

- 1.: top canvas layer
- 2.: core wires
- 3.: adhesive rubber layer
- 4.: ribs
- 5.: compressed rubber layer
- 11.: driven pulley
- 12.: drive pulley
- 13.: rib pulley

## Claims

1. A friction transmission belt
which contains a compressed rubber layer (5) having a hardness after vulcanization measured by a type A durometer according to JIS K 6253 in a range of from 80 or higher to less than 95; and
containing ethylene-α-olefin elastomer and silica and
practically no short fiber,
wherein the content of the silica is 40 to 100 parts by weight to 100 parts by weight of the ethylene-α-olefin elastomer.

2. The friction transmission belt according to Claim 1,
wherein
the ethylene content in the ethylene-α-olefin elastomer is 60 % by weight or higher and less than 80 % by weight.

3. The friction transmission belt according to Claim 1, or 2,
being a V-ribbed belt or a flat belt.

4. The friction transmission belt according to Claim 1, 2, or 3,
wherein
the compressed rubber layer (5) contains additionally a silane coupling agent.

5. The friction transmission belt according to Claim 4,
wherein
the content of the silane coupling agent is 1 to 20 parts by weight per 100 parts by weight of the ethylene-α-olefin elastomer.

## Patentansprüche

1. Friktionsantriebsriemen,
der eine Kompressionskautschukschicht (5) aufweist, die nach der Vulkanisierung eine durch einen Härtemesser Typ A gemäß JIS 6253 gemessene Härte im Bereich von 80 oder höher und weniger als 95 hat; und
enthaltend Ethylen-α-olefinelastomer und Silica und
praktisch keine kurze Faser,
wobei der Gehalt von Silica 40 bis 100 Gewichtsteile auf 100 Gewichtsteile des Ethylen-α-olefinelastomers beträgt

2. Friktionsantriebsriemen nach Anspruch 1,
wobei der Ethylengehalt in dem Ethylen-α-olefinelastomer 60 Gew.-% oder mehr und weniger als 80 Gew.-%b.

3. Friktionsantriebsriemen nach Anspruch 1 oder 2,
der ein V-Rippenriemen oder Flachriemen ist.

4. Friktionsantriebsriemen nach Anspruch 1, 2 oder 3,
wobei die Kompressionskautschukschicht (5) zusätzlich ein Silankopplungsmittel enthält.

5. Friktionsantriebsriemen nach Anspruch 4,
wobei der Gehalt des Silankopplungsmittels 1 bis 20 Gewichtsteile auf 100 Gewichtsteile des Ethylen-α-olefinelastomers beträgt.

## Revendications

1. Courroie de transmission par friction
qui contient une couche de caoutchouc comprimé (5) ayant une dureté après vulcanisation mesurée par un duromètre de type A selon JIS K 6253 dans une plage de 80 ou plus à moins de 95 ; et
contenant un élastomère d'éthylène-α-oléfine et de la silice, et
pratiquement aucune fibre courte,
dans laquelle la teneur en silice est de 40 à 100 parties en poids pour 100 parties en poids de l'élastomère d'éthylène-α-oléfine.

2. Courroie de transmission par friction selon la revendication 1,
dans laquelle
la teneur en éthylène dans l'élastomère d'éthylène-α-oléfine est de 60 % en poids ou plus et moins de 80 % en poids.

3. Courroie de transmission par friction selon la revendication 1, ou 2,
étant une courroie à nervures en V ou une courroie plate.

4. Courroie de transmission par friction selon la revendication 1, 2, ou 3,
dans laquelle
la couche en caoutchouc comprimé (5) contient de plus un agent adhésif au silane.

5. Courroie de transmission par friction selon la revendication 4,
dans laquelle
la teneur en agent adhésif au silane est de 1 à 20 parties en poids par 100 parties en poids de l'élastomère d'éthylène-α-oléfine.
